# EUROPÄISCHE PATENTSCHRIFT

(11) **EP 1 394 102 B1**
(45) Veröffentlichungstag und Bekanntmachung des Hinweises auf die Patenterteilung: **23.05.2007**
(21) Anmeldenummer: 03005854.9
(22) Anmeldetag: 15.03.2003
(51) Int. Cl.: C01B 3/32, F28C 3/08

(54) **Verdampferanordnung, insbesondere zur Erzeugung eines in einem Reformer zur Wasserstoffgewinnung zersetzbaren Kohlenwasserstoff/Mischmaterial-Gemisches**
Evaporator, especially for use in reformer
Dispositif d'évaporation, spécialement pour la utilisation dans un disposif de reformage

(30) Priorität: 12.07.2002 DE 10231883
(43) Veröffentlichungstag der Anmeldung: 03.03.2004
(73) Patentinhaber: J. Eberspächer GmbH & Co. KG, 73730 Esslingen (DE)
(72) Erfinder: Kaupert, Andreas, 89073 Ulm (DE); Köhne, Heinrich, Univ.-Prof.Dr.-Ing., 52072 Aachen (DE); Eberspach, Günter, 72649 Wolfschlugen (DE)

(56) Entgegenhaltungen:
- EP-A- 0 166 329
- CH-A- 148 275
- DE-A- 10 120 027
- DE-A- 10 130 638
- DE-A- 19 717 544
- US-A- 4 262 482
- US-A- 5 617 995

## Beschreibung

Die vorliegende Erfindung betrifft eine Verdampferanordnung, insbesondere zur Erzeugung eines in einem Reformer zur Wasserstoffgewinnung zersetzbaren Kohlenwasserstoff/Mischmaterial-Gemisches.

Reformer dienen dazu, in einer katalytischen Reaktion Kohlenwasserstoffe oder kohlenwasserstoffhaltige Materialien aufzuspalten und dabei Wasserstoff freizusetzen bzw. zu gewinnen. Dieser Wasserstoff kann beispielsweise in Brennstoffzellen zur Erzeugung elektrischer Energie genutzt werden, kann aber beispielsweise auch in einem Abgasführungssystem einer Brennkraftmaschine zur Abgasaufbereitung genutzt werden. Die in einem derartigen Reformer ablaufende katalytische Reaktion erfordert zur effizienten Durchführung derselben einerseits, dass zum Beginn der Reaktion im Bereich des Katalysatormaterials vergleichsweise hohe Temperaturen im Bereich von etwa 320 °C vorliegen. Andererseits ist es erforderlich, dass das dem Katalysatormaterial zugeführte Gemisch aus Kohlenwasserstoffen und z. B. Luft, ggf. unter Beimengung von Wasserdampf, möglichst homogen ist.

Es ist die Aufgabe der vorliegenden Erfindung, eine Verdampferanordnung, beispielsweise zur Erzeugung eines in einem Reformer zur Wasserstoffgewinnung zersetzbaren Kohlenwasserstoff/Mischmaterial-Gemisches vorzusehen, mit der in effizienter Art und Weise eine gute Durchmischung des zur Gemischbildung vorgesehenen Mischmaterials mit dem Kohlenwasserstoff erlangt werden kann.

Erfindungsgemäß wird diese Aufgabe gelöst durch eine Verdampferanordnung, insbesondere zum Erzeugen eines in einem Reformer zur WasserstoffgewinnungzersetzbarenKohlenwasserstoff/Mischmaterial-Gemisches, umfassend ein poröses Verdampfermedium, eine Kohlenwasserstoffzuführleitungsanordnung zum Zuführen von Kohlenwasserstoff zu dem porösen Verdampfermedium sowie eine Mischmaterialführungsanordnung zum Leiten wenigstens eines Teils des zur Gemischbildung vorgesehenen Mischmaterials durch das Verdampfermedium hindurch.

Durch das Strömen des zur Gemischbildung vorgesehenen Mischmaterials oder zumindest eines Teils davon durch das den flüssigen Kohlenwasserstoff, beispielsweise Dieselkraftstoff, aufnehmende poröse Medium hindurch wird sichergestellt, dass bereits in diesem porösen Medium ein Kontakt zwischen dem Mischmaterial und dem Kohlenwasserstoff besteht und hier einerseits ein Transporteffekt erlangt wird, so dass im porösen Medium vorhandener Kohlenwasserstoff von der dieses durchströmenden Mischmaterial mitgerissen wird, und andererseits, im porösen Medium bereits ein gewisses Ausmaß an Durchmischung erzeugt wird.

Um den Mischmaterialdurchtritt durch das poröse Verdampfermedium hindurch zu verbessern, wird vorgeschlagen, dass das Verdampfermedium eine Mehrzahl von Mischmaterialdurchtrittsöffnungen aufweist. Derartige Mischmaterialdurchtrittsöffnungen können dann im Allgemeinen jeweils einen Querschnitt bzw. eine Querschnittsfläche bereitstellen, die größer ist als die mittlere Querschnittsfläche der im porösen Material vorhandenen Poren, so dass im Wesentlichen das Mischmaterial das poröse Medium im Bereich dieser Mischmaterialdurchtrittsöffnungen durchströmt.

Um die Abdampfung des Brennstoffs in dem porösen Verdampfermedium, insbesondere in der Startphase, in welcher die verschiedenen Systembereiche noch vergleichsweise kalt sind oder sein können, zu unterstützen, wird vorgeschlagen, dass dem Verdampfermedium eine elektrisch betreibbare Heizeinrichtung zugeordnet ist. Dabei ist vorzugsweise dann vorgesehen, dass die Heizeinrichtung - bezogen auf die Durchströmung des Verdampfermediums mit Mischmaterial - an einer stromaufwärtigen Seite des Verdampfermediums in Wärmeübertragungskontakt mit diesem angeordnet ist.

Um dafür zu sorgen, dass die durch die Heizeinrichtung bereitgestellte Wärme zumindest im wesentlichen Teil zur Erwärmung des porösen Mediums bzw. des darin zu verdampfenden flüssigen Kohlenwasserstoffs genutzt werden kann, wird vorgeschlagen, dass der Heizeinrichtung eine Abschirmanordnung zur Abschirmung derselben gegen das auf das Verdampfermedium zu strömende Mischmaterial zugeordnet ist. Dabei kann die Abschirmanordnung beispielsweise eine Mischmaterialdurchtrittsöffnungen aufweisende Abschirmplatte umfassen. Diese Mischmaterialdurchtrittsöffnungen können dann vorzugsweise mit den Mischmaterialdurchtrittsöffnungen im Verdampfermedium ausgerichtet sein, um hier einen möglichst geringen Strömungswiderstand für das das poröse Medium durchströmende Mischmaterial bereitstellen zu können.

Um über die Oberfläche des porösen Verdampfermediums hinweg eine möglichst gleichmäßige und effiziente Erwärmung desselben erlangen zu können, wird vorgeschlagen, dass die Heizeinrichtung ein wenigstens bereichsweise gebogen oder spiralartig verlaufendes Heizelement aufweist. Weiter kann die Erwärmung des porösen Verdampfermediums dadurch noch effizienter gestaltet werden, dass das Verdampfermedium wenigstens teilweise in einem von dem Heizelement umgebenen Raumbereich angeordnet ist.

Bei einer alternativen Ausgestaltungsform kann vorgesehen sein, dass in einem - bezogen auf die Durchströmung des Verdampfermediums mit Mischmaterial - stromaufwärtigen Bereich der Mischmaterialführungsanordnung und in Abstand zu dem Verdampfermedium eine elektrisch betreibbare Mischmaterialheizeinrichtung vorgesehen ist. Bei dieser Variante wird also die über eine elektrisch betreibbare Heizeinrichtung zugeführte Wärme nicht direkt in das poröse Verdampfermedium eingeleitet, sondern wird zur Erwärmung des durch dieses hindurchzuleitenden Mischmaterials genutzt. Das erwärmte Mischmaterial tritt in das poröse Verdampfermedium ein und erwärmt dabei dieses und den darin vorhandenen flüssigen Brennstoff.

Wie bereits eingangs erwähnt, ist es zur Durchführung eines effizienten Katalysevorgangs erforderlich, dass die Temperatur der Systemkomponenten in diesem Bereich bei über 300 °C liegt. Um vor allem in der Startphase möglichst schnell diese Temperaturen erreichen zu können, wird vorgeschlagen, dass - bezogen auf die Durchströmung des Verdampfermediums mit Mischmaterial - stromabwärts von dem Verdampfermedium eine Misch/Brenn-Kammer vorgesehen ist, in welcher vermittels eines Zündorgans das in diese eingeleitete Gemisch gezündet werden kann. Durch eine Verbrennung zumindest eines Teils des Gemisches in einem stromaufwärts des Katalysatormaterials gelegenen Bereichs wird erreicht, dass die bei der Verbrennung entstehenden heißen Abgase in Richtung Katalysatormaterial strömen und dabei dieses bzw. den dieses aufweisenden Systembereich sehr schnell erwärmen. Ist die Temperatur in diesem Bereich ausreichend hoch, kann die Verbrennung gestoppt werden, beispielsweise durch Veränderung des Kohlenwasserstoff/Mischmaterial-Verhältnisses, um dann nach Einstellung eines geeigneten Gemischverhältnisses die katalytische Reaktion fortzusetzen bzw. aufzunehmen.

Ferner kann dem erfindungsgemäßen Reformer eine Wärmetauscheranordnung zugeordnet sein zur Übertragung von Prozesswärme auf zur Gemischbildung vorgesehenes Mischmaterial. Diese Prozesswärme, also beispielsweise Wärme, die diejenigen gasförmigen Materialien transportieren, die das Katalysatormaterial verlassen, oder ggf. beispielsweise auch die in einer Brennstoffzelle erzeugte Prozesswärme, trägt dann zu einer Vorerwärmung des Mischmaterials bei, das zumindest teilweise durch das poröse Verdampfermedium hindurchgeleitetwird. Dies bedeutet, dass nach Starten des Prozesses, also beispielsweise nach Start der katalytischen Reaktion, ein weiteres Betreiben eines elektrischen Heizelements nicht erforderlich ist, da durch das in der Wärmetauscheranordnung vorerwärmte Mischmaterial ausreichend Wärmeenergie zum Verdampfen des im porösen Verdampfermedium enthaltenen flüssigen Kohlenwasserstoffs transportiert wird.

Die vorliegende Erfindung betrifft ferner einen Reformer, welcher eine erfindungsgemäße Verdampferanordnung aufweist.

Obgleich ein wesentlicher Einsatzbereich einer erfindungsgemäßen Verdampferanordnung im Bereich von Reformern liegt, also Systemen, bei welchen auseinem Kohlenwasserstoff/Mischmaterial-Gemisch Wasserstoff, beispielsweise zur Elektrizitätserzeugung in einer Brennstoffzelle, erzeugt wird, kann die erfindungsgemäße Verdampferanordnung selbstverständlich auch in anderen Bereichen eingesetzt werden. Beispielsweise kann sie Anwendung finden in Heizgeräten, in welchen verdampfter Brennstoff zusammen mit einem weiteren Verbrennungsmedium, beispielsweise Verbrennungsluft oder einem sonstigen Mischmaterial, verbrannt wird und die dabei in den Verbrennungsabgasen transportierte Wärme dann in einem Wärmetauscher auf zu erwärmende Luft oder ein anderes zu erwärmendes Medium übertragen wird. Ein weiterer Einsatzbereich ist die Reinigung von Abgasen, die von einer Brennkraftmaschine ausgestoßen werden. Hier kann also die erfindungsgemäße Verdampferanordnung in einem Abgasführungssystem, also beispielsweise einem Auspuffsystem eines Kraftfahrzeugs, zur Erzeugung eines zündfähigen Gemisches aus Kohlenwasserstoff und Mischmaterial, im Allgemeinen Luft, eingesetzt werden.

Nachfolgend wird die Erfindung mit Bezug auf die beiliegenden Zeichnungen anhand bevorzugter Ausgestaltungsformen beschrieben. Es zeigt:
- Fig. 1: eine Prinzip-Längsschnittansicht eines erfindungsgemäßen Reformers gemäß einer ersten Ausgestaltungsform;
- Fig. 2: eine Längsschnittansicht eines porösen Verdampfermediums mit der diesem zugeordneten Heizeinrichtung;
- Fig. 3: eine der Fig. 2 entsprechende Ansicht einer alternativen Ausgestaltungsform;
- Fig. 4: eine der Fig. 1 entsprechende Ansicht eines alternativ ausgestalteten Reformers.

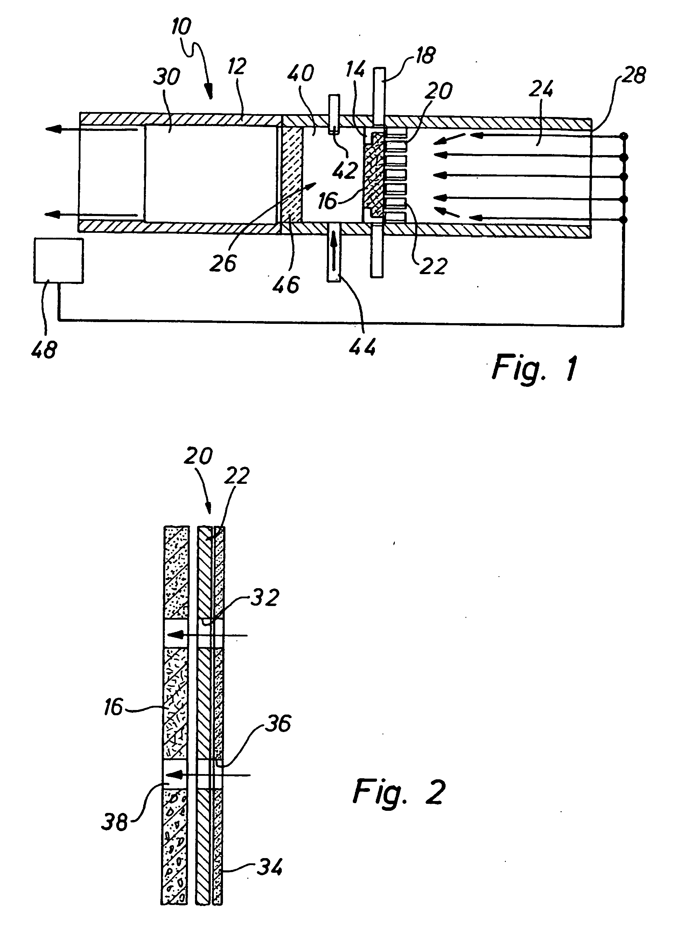

In Fig. 1 ist ein erfindungsgemäßer Reformer mit 10 bezeichnet. Dieser Reformer 10 umfasst ein beispielsweise röhrenartiges, langgestrecktes Gehäuse 12. Im Gehäuse 12 ist über einen ringartigen Träger 14 ein beispielsweise platten- oder scheibenartig geformtes poröses Verdampfermedium 16 getragen. Dieses poröse Verdampfermedium kann beipsielsweise aus verpressten, gesinterten Drahtstücken, gewebe- oder geflechtartigem Material, Schaumkeramik, Vliesmaterial, Gittergefüge, Gespinste o. dgl. aufgebaut sein. Eine Brennstoffzuführleitungsanordnung 18 führt an mehreren Umfangsbereichen zu dem Verdampfermedium 16, so dass flüssiger Brennstoff, beispielsweise Dieselkraftstoff, in das Verdampfermedium 16 in möglichst gleichförmig über den Umfang verteilter Art und Weise eingespeist werden kann. An einer Seite des Verdampfermediums 16 ist diesem zugeordnet eine elektrisch betreibbare Heizeinrichtung 20 vorgesehen. Diese kann ein beispielsweise spiralartig oder mäanderartig gewundenes Heizelement 22 umfassen, das in direktem Wämeübertragungskontakt mit dem Verdampfermedium 16 steht. Bei Aktivierung der Heizeinrichtung 20 wird das Verdampfermedium 16 erwärmt, so dass die Abdampfung des darin enthaltenen flüssigen Brennstoffs bzw. Kohlenwasserstoffs verstärkt bzw. ausgelöst werden kann.

Durch das Verdampfermedium 16 wird der Innenraum des Gehäuses 12 in einen stromaufwärtigen Bereich 24 und einen stromabwärtigen Bereich 26 unterteilt. Der stromaufwärtige Bereich 24 bildet zumindest einen Teil einer Luftführungsanordnung 28, über welche die zusammen mit dem verdampften Brennstoff bzw. Kohlenwasserstoff in einem im stromabwärtigen Bereich 26 vorgesehenen Katalysator 30 zur Wasserstoffgewinnung genutzte Luft als Mischmaterial oder einem Teil davon zugeführt wird. Zumindest ein Teil dieser Luft strömt also durch den stromaufwärtigen Bereich 24 des Gehäuses 12 auf das poröse Verdampfermedium 16 zu. Diese Luft, welche beispielsweise durch ein nicht dargestelltes Gebläse gefördert wird, durchdringt das poröse Verdampfermedium 16. Dabei nimmt sie in diesem Verdampfermedium 16 bereits vorhandenen abgedampften Brennstoff mit bzw. verstärkt die Abdampfung, so dass durch dieses Durchströmen nicht nur eine verbesserte Abdampfung, sondern auch eine verbesserte Durchmischung der Luft mit dem Brennstoff erzielt werden kann. Bevor diese Luft in das Verdampfermedium 16 eintritt, strömt sie jedoch an der Heizeinrichtung 20 vorbei, beispielsweise in den zwischen den jeweiligen Wendel- bzw. Heizelementenabschnitten gebildeten Zwischenräumen. Um dabei dafür zu sorgen, dass die durch die Heizeinrichtung 20 bereitgestellt Wärme im Wesentlichen nur zur Erwärmung des Verdampfermediums 16 bzw. des darin enthaltenen Brennstoffs genutzt wird, und nicht zur Erwärmung der im stromaufwärtigen Bereich 24 strömenden Luft, wird vorzugsweise die Heizeinrichtung 20 bzw. das Heizelement 22 derselben durch eine Abschirmanordnung gegen die heranströmende Luft abgeschirmt. Ein Beispiel hierfür ist in Fig. 2 schematisch dargestellt. Man erkennt das poröse Verdampfermedium 16 und die stromaufwärts desselben angeordnete Heizeinrichtung 20 mit ihrem Heizelement 22. In verschiedenen Bereichen des Heizelements 22 sind Öffnungen 32 vorgesehen, beispielsweise die zwischen den Spiral- oder Wendelabschnitten gebildeten Zwischenräume oder lochartige Öffnungen im Falle einer mehr oder weniger plattenartigen Ausgestaltung des Heizelements 22. Stromaufwärts bezüglich des Heizelements 22 ist eine Abschirmplatte 34 vorgesehen, die vorzugsweise aus thermisch isolierendem Material, beispielsweise aus Keramikmaterial, aufgebaut ist. In Zuordnung zu den Öffnungen oder Durchtrittsbereichen 32 des Heizelements 22 weist auch diese Platte Öffnungen 36 auf, so dass die im stromaufwärtigen Bereich 24 heranströmende Luft im Wesentlichen nicht auf das Heizelement 22 auftreten kann, sondern nach Durchströmen der Öffnungen oder Durchtrittsbereiche 32, 36 auf das Verdampfermedium 16 trifft. Auch dieses weist vorzugsweise in räumlicher Zuordnung zu den Öffnungen 32, 36 Durchtrittsöffnungen 38 für die Luft auf. Das Vorsehen dieser Durchtrittsöffnungen 38 vermindert den Strömungswiderstand, hat gleichwohl jedoch zur Folge, dass die heranströmende Luft in verschiedenen Bereichen das Verdampfermedium 16 durchsetzt und dabei Brennstoff bzw. Kohlenwasserstoff mitnimmt. In denjenigen Bereichen, in welchen die Luft dann aus den Durchtrittsöffnungen 38 austritt, werden Verwirbelungen erzeugt, so dass auch dort eine verbesserte Durchmischung des abdampfenden Brennstoffs mit der Luft erzeugt wird. Bereits mit Brennstoff durchmischte Luft gelangt dann in den stromabwärtigen Bereich, und zwar dort in eine Misch/Brennkammer 40. Diese weist ein Zündorgan 42, beispielsweise einen Glühzündstift, auf, in welcher das wie vorangehend beschrieben gebildete Gemisch, möglicherweise weiter durchmischt mit durch eine Bypassleitung 44 zugeführter weiterer Luft, zur Zündung und Verbrennung gebracht werden kann. Weiter stromabwärts befindet sich dann vor dem Katalysator 30 eine Flammsperre 46, deren Funktion nachfolgend noch beschrieben wird. Ferner kann das erfindungsgemäße System eine Wärmetauscheranordnung 48 aufweisen, über welche die in den stromaufwärtigen Bereich 24 einzuspeisende Luft bzw. generell in das Gehäuse 10 einzuspeisende Luft vorgewärmt werden kann. Diese Wärmetauscheranordnung 48 kann die auf die Luft zu übertragende Wärme aus der Prozesswärme gewinnen, die beispielsweise durch die katalytische Reaktion im Katalysator 30 erzeugt wird oder die beispielsweise auch bei Einsatz in Verbindung mit einem Brennstoffzellensystem dort erzeugt wird.

Im Folgenden wird die Funktionsweise bzw. der Betrieb des in der Fig. 1 dargestellten Systems beschrieben.

In der Startphase, also einer Phase, in welcher die verschiedenen Systemkomponenten vergleichsweise kalt sind, wird die Heizeinrichtung 20 aktiviert, um den in das Verdampfermedium 16 eingespeisten Brennstoff zu verdampfen. Die über den stromaufwärtigen Bereich 24 heranströmende Luft wird Umgebungstemperatur aufweisen; eine Wärmeübertragung in der Wärmetauscheranordnung 48 ist noch nicht möglich, da Prozesswärme noch nicht vorhanden ist. Es wird in der vorangehend beschriebenen Art und Weise dann eine Durchmischung der Luft mit dem abgedampften Brennstoff erzeugt, so dass in der Misch/Brenn-Kammer 40 ein zündfähiges Gemisch vorhanden ist. Dieses wird durch Erregung des Zündorgans 42 auch zur Zündung gebracht, so dass die entstehenden Verbrennungsabgase in Richtung Katalysator 30 strömen. Dabei transportierten diese Verbrennungsabgase eine erhebliche Wärmemenge, die auf das Katalysatormaterial bzw. den Katalysatorsystembereich übertragen wird und diesen erwärmt. Liegt dort eine ausreichende Temperatur vor, also eine Temperatur, welche das Starten bzw. die Durchführung der katalytischen Reaktion ermöglicht, wird die Verbrennung in der Kammer 40 beendet, beispielsweise dadurch, dass kurzzeitig die Brennstoffzufuhr unterbrochen wird oder das Brennstoff/Luft-Verhältnis so verändert wird, dass die Verbrennung beendet wird. Nachfolgend wird dann das für die Durchführung der katalytischen Reaktion geeignete Brennstoff/Luft-Verhältnis eingestellt, so dass nunmehr die mit verdampftem Brennstoff und ggf. auch Wasserdampf angereicherte Luft im stromabwärtigen Bereich 26 durch die Flammsperre 46 hindurch zum Katalysator 30 strömt und dort zur Gewinnung von Wasserstoff zersetzt wird. Dabei entsteht dann die angesprochene Prozesswärme, die in der Wärmetauscheranordnung 48 auf die in den Verdampfer 10 einzuspeisende Luft übertragen werden kann, so dass diese dann bereits vorerwärmt in den stromaufwärtigen Bereich 24 gelangt. Allein die in der Luft dann transportierte Wärmeenergie genügt, um das Verdampfermedium 16 nunmehr so zu erwärmen bzw. warm zu halten, dass der in dieses eingespeiste Brennstoff zur Verdampfung gebracht wird. Die Heizeinrichtung 20 muss dann nicht weiter betrieben werden. Die Flammsperre 46 ist im Wesentlichen dazu vorgesehen, Rückzündungen und Fremdzündungen, ausgehend vom Katalysatormaterial, zu vermeiden. Diese können dann entstehen, wenn bei im Bereich des Katalysators 30 vorliegenden sehr hohen Temperaturen die Gefahr der Zündung des Gemisches in dem stromaufwärts vom Katalysator 30 liegenden Raumbereich auftreten könnte. Die Flammensperre 46 verhindert dann eine Ausbreitung der Flammen zurück in Richtung zur Misch/Brenn-Kammer 40. Auch werden dadurch Selbstzündungen des Brennstoffs in der Misch/Brenn-Kammer 40 vermieden.

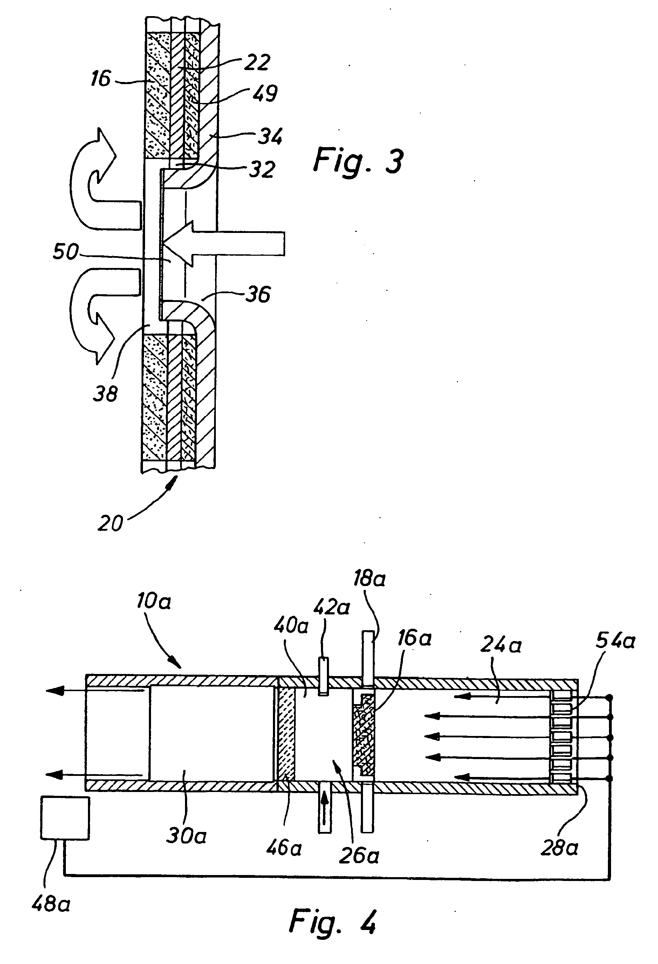

An dem vorangehend beschriebenen Verdampfer 10 können verschiedene Änderungen vorgenommen werden. So ist es selbstverständlich möglich, insbesondere den Bereich des porösen Verdampfermediums bzw. der Heizeinrichtung anders zu gestalten. Eine Abwandlung ist beispielsweise in der Fig. 3 gezeigt. Man erkennt dort wieder eine beispielsweise aus Blechmaterial gebildete Abschirmplatte 34 sowie ein Isoliermaterial 48 zwischen dieser und dem Heizelement 22 der Heizeinrichtung 20. Auf die Heizeinrichtung 20 folgend ist dann vorzugsweise in direktem körperlichen Kontakt mit dieser wieder das Verdampfermedium 16 angeordnet. Die Öffnungen 36 der Abschirmplatte 34 sind hier im Bereich von sich zumindest über einen kurzen Bereich in Strömungsrichtung erstreckenden, vorzugsweise zylindrischen Ansätzen 50 gebildet, welche das Isoliermaterial 48 und vorzugsweise auch die Heizeinrichtung 20 überbrücken und beispielsweise im Bereich der oder vor den Durchtrittsöffnungen 38 des Verdampfermediums 16 enden, so dass dort dann heranströmende Luft in Kontakt mit dem Verdampfermedium 16 bzw. dem darin enthaltenen Brennstoff bzw. Kohlenwasserstoff gelangen kann.

Bei einer weiteren Abwandlung kann vorgesehen sein, dass das Verdampfermedium 16 zumindest bereichsweise in die Zwischenräume zwischen den beispielsweise spiralartig oder mäanderartig sich erstreckenden Abschnitten des Heizelements 22 eindringt, so dass ein verbesserter Wärmeübertragungskontakt zwischen dem Heizelement 22 und dem Verdampfermedium 16 besteht. Vorzugsweise weist gleichwohl jedoch das Verdampfermedium 16 in diesem Falle auch einen scheibenartigen Bereich auf, um eine möglichst gleichmäßige Brennstoffzufuhr zu ermöglichen. Weiterhin ist es auch möglich, dass das Verdampfermedium 16 stromaufwärts bezüglich der Heizeinrichtung 20 angeordnet ist, dass also im Falle der Fig. 2 die räumliche Anordnung dieser beiden Komponenten vertauscht ist. In diesem Falle, in welchem hinsichtlich der Wärmeübertragung zwischen der Heizeinrichtung 20 und dem Verdampfermedium 16 die gleichen Bedingungen vorherrschen, bildet das Verdampfermedium 16 gleichzeitig auch die Abschirmung für die Heizeinrichtung 20, so dass hierfür keine zusätzlichen Organe vorgesehen sein müssen. Sollte es erforderlich sein, die Heizeinrichtung 20 zur Brenn/Mischkammer 40 hin abzuschirmen, so kann dies beispielsweise auch dadurch erfolgen, dass die Heizeinrichtung 20 in das Material des Verdampfermediums eingebettet wird. In diesem Falle kann beispielsweise das Verdampfermedium zwei scheibenartige Bereiche umfassen, von welchen zumindest einer dann bereichsweise in die Zwischenräume zwischen verschiedenen Bereichen oder Abschnitten des Heizelements eindringen kann. In Abhängigkeit von der Positionierung der Heizeinrichtung 20 bezüglich des Verdampfermediums 16 kann die Brennstoffzufuhr in das Verdampfermedium 16 stromabwärts, stromaufwärts oder im Bereich der Heizeinrichtung erfolgen.

Eine alternative Ausgestaltungsform eines erfindungsgemäßen Verdampfers ist in Fig. 4 gezeigt. Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet. Im Folgenden wird lediglich auf die Unterschiede eingegangen.

Man erkennt hier, dass die dem Verdampfermedium 16a zugeordnete Heizeinrichtung nicht mehr vorhanden ist. Vielmehr ist weiter stromaufwärts im stromaufwärtigen Bereich 24a eine Luftheizeinrichtung 54a vorgesehen, die über die Luftführungsanordnung 28a in den stromaufwärtigen Bereich 24a heranströmende Luft vorwärmt. Die Luft transportiert dann Wärme auf das Verdampfermedium 16, wo diese wiederum zur Verdampfung des in dieses eingeleiteten Brennstoffs genutzt wird. Auch diese elektrisch betreibbare Luftheizeinrichtung 54a wird vorzugsweise nur in der Startphase aktiviert. Fällt in irgendeinem Systembereich dann Prozesswärme an, kann diese wiederum durch die schematisch angedeutete Wärmetauscheranordnung 48a genutzt werden, um die in den Verdampfer 10a einzuspeisende Luft vorzuwärmen. Die Luftheizeinrichtung 54a kann dann deaktiviert werden. Auch bei dieser Ausgestaltungsform ist jedoch wieder vorgesehen, dass zumindest ein Teil der zur Gemischbildung heranzuziehenden Luft das Verdampfermedium 16a vorzugsweise im Bereich von darin vorgesehenen Durchtrittsöffnungen durchströmt und dabei für eine sehr gute, über den gesamten Querschnitt des Verdampfermediums 16a verteilte Durchmischung der zur Gemischbildung dienenden Luft, welche ggf. mit Wasser bzw. Wasserdampf angereichert ist, und mit Brennstoff bzw. Kohlenwasserstoff sorgt.

Durch die vorliegende Erfindung ist eine Verdampferanordnung zur Erzeugung eines in einem Reformer einsetzbaren Kohlenwasserstoff/Luft-Gemisches, ggf. angereichert mit Wasserdampf, vorgesehen, mit welcher eine sehr gute Durchmischung der Luft mit Brennstoff, d. h. ein sehr homogenes Gemisch, über den gesamten Strömungsquerschnitt erlangt werden kann. Vor allem durch das Bereitstellen der Durchtrittsöffnungen im Verdampfermedium wird der Strömungswiderstand der dieses durchsetzenden Luft gemindert, was aufgrund der Tatsache, dass die entweder zur Lufterwärmung oder zur Erwärmung des Verdampfermediums direkt wirkende Heizeinrichtung nur in der Startphase betrieben werden muss, zur Energieeinsparung beiträgt. Vor allem die Erzeugung eines sehr homogenen Gemisches führt dann auch zu einer im Katalysator ablaufenden hochqualitativen Katalysereaktion mit nur geringem Anfall an Rückständen. Es sei noch darauf hingewiesen, dass die Gemischbildung auch unter Einsatz von Wasserdampf als Mischmaterial erfolgen kann.

## Patentansprüche

1. Verdampferanordnung, insbesondere zum Erzeugen eines in einem Reformer zur Wasserstoffgewinnung zersetzbaren Kohlenwasserstoff/Mischmaterial-Gemisches, umfassend ein poröses Verdampfermedium (16; 16a), eine Kohlenwasserstoffzuführleitungsanordnung (18; 18a) zum Zuführen von Kohlenwasserstoff zu dem porösen Verdampfermedium (16; 16a) sowie eine Mischmaterialführungsanordnung (28; 28a) zum Leiten wenigstens eines Teils des zur Gemischbildung vorgesehenen Mischmaterials durch das Verdampfermedium (16; 16a) hindurch.

2. Verdampferanordnung nach Anspruch 1,
**dadurch gekennzeichnet, dass** das Verdampfermedium (16; 16a) eine Mehrzahl von Mischmaterialdurchtrittsöffnungen (38) aufweist.

3. Verdampferanordnung nach Anspruch 1 oder 2,
**dadurch gekennzeichnet, dass** dem Verdampfermedium (16) eine elektrisch betreibbare Heizeinrichtung (20) zugeordnet ist.

4. Verdampferanordnung nach Anspruch 3,
**dadurch gekennzeichnet, dass** die Heizeinrichtung (20) - bezogen auf die Durchströmung des Verdampfermediums (16) mit Mischmaterial - an einer stromaufwärtigen Seite des Verdampfermediums (16) in Wärmeübertragungskontakt mit diesem angeordnet ist.

5. Verdampferanordnung nach Anspruch 4,
**dadurch gekennzeichnet, dass** der Heizeinrichtung (20) eine Abschirmanordnung (34) zur Abschirmung derselben gegen das auf das Verdampfermedium (16) zu strömende Mischmaterial zugeordnet ist.

6. Verdampferanordnung nach Anspruch 5,
**dadurch gekennzeichnet, dass** die Abschirmanordnung (34) eine Mischmaterialdurchtrittsöffnungen (36) aufweisende Abschirmplatte (34) umfasst.

7. Verdampferanordnung nach einem der Ansprüche 3 bis 6,
**dadurch gekennzeichnet, dass** die Heizeinrichtung (20) ein wenigstens bereichsweise gebogen oder spiralartig verlaufendes Heizelement (22) aufweist.

8. Verdampferanordnung nach Anspruch 7,
**dadurch gekennzeichnet, dass** das Verdampfermedium (16) wenigstens teilweise in einem von dem Heizelement (22) umgebenen Raumbereich angeordnet ist.

9. Verdampferanordnung nach Anspruch 1 oder 2,
**dadurch gekennzeichnet, dass** in einem - bezogen auf die Durchströmung des Verdampfermediums (16) mit Mischmaterial - stromaufwärtigen Bereich der Mischmaterialführungs anordnung (28) und in Abstand zu dem Verdampfermedium (16) eine elektrisch betreibbare Mischmaterialheizeinrichtung (54a) vorgesehen ist.

10. Verdampferanordnung nach einem der Ansprüche 1 bis 9,
**dadurch gekennzeichnet, dass** - bezogen auf die Durchströmung des Verdampfermediums (16; 16a) mit Mischmaterial - stromabwärts von dem Verdampfermedium (16; 16a) eine Misch/Brenn-Kammer (40; 40a) vorgesehen ist, in welcher vermittels eines Zündorgans das in diese eingeleitete Gemisch gezündet werden kann.

11. Verdampferanordnung nach einem der Ansprüche 1 bis 10,
**gekennzeichnet durch** eine Wärmetauscheranordnung (48; 48a) zur Übertragung von Prozesswärme auf zur Gemischbildung vorgesehenes Mischmaterial.

12. Reformer zur Gewinnung von Wasserstoff aus einem Kohlenwasserstoff/Mischmaterial-Gemisch, umfassend eine Verdampferanordnung (10; 10a) nach einem der vorhergehenden Ansprüche.

13. Reformer nach Anspruch 12,
**dadurch gekennzeichnet, dass** das Mischmaterial Luft oder/und Wasserdampf umfasst.

14. Heizgerät zur Wärmeerzeugung durch Verbrennung eines Kohlenwasserstoff/Mischmaterial-Gemisches, umfassend eine Verdampferanordnung nach einem der Ansprüche 1 bis 11, zur Erzeugung des Kohlenwasserstoff/Mischmaterial-Gemisches.

15. Abgasreinigungssystem zur Reinigung der von einer Brennkraftmaschine ausgestoßenen Gase, umfassend eine Verdampferanordnung nach einem der Ansprüche 1 bis 11, zur Erzeugung eines Kohlenwasserstoff/Mischmaterial-Gemisches.

## Claims

1. Evaporator arrangement, in particular for generating a hydrocarbon/mixing-material mixture that can break down in a reformer to produce hydrogen, comprising a porous evaporator medium (16; 16a), a hydrocarbon feed-line arrangement (18; 18a) for feeding hydrocarbon to the porous evaporator medium (16; 16a) and a mixing-material conducting arrangement (28; 28a) for directing at least part of the mixing material intended for forming the mixture through the evaporator medium (16; 16a).

2. Evaporator arrangement according to Claim 1, **characterized in that** the evaporator medium (16; 16a) has a plurality of mixing material through-openings (38).

3. Evaporator arrangement according to Claim 1 or 2, **characterized in that** the evaporator medium (16) is assigned an electrically operable heating device (20).

4. Evaporator arrangement according to Claim 3, **characterized in that** the heating device (20) is arranged on an upstream side - with respect to the flow of mixing material through the evaporator medium (16) - of the evaporator medium (16), in heat transfer contact with the latter.

5. Evaporator arrangement according to Claim 4, **characterized in that** the heating device (20) is assigned a shielding arrangement (34) for shielding the same against the mixing material that is to flow onto the evaporator medium (16).

6. Evaporator arrangement according to Claim 5, **characterized in that** the shielding arrangement (34) comprises a shielding plate (34) having mixing material through-openings (36).

7. Evaporator arrangement according to one of Claims 3 to 6, **characterized in that** the heating device (20) has a heating element (22) that extends in a bent or spiral manner, at least in certain regions.

8. Evaporator arrangement according to Claim 7, **characterized in that** the evaporator medium (16) is arranged at least partly in a spatial region surrounded by the heating element (22).

9. Evaporator arrangement according to Claim 1 or 2, **characterized in that** an electrically operable mixing-material heating device (54a) is provided in a downstream region - with respect to the flow of mixing material through the evaporator medium (16) - of the mixing-material conducting arrangement (28) and at a distance from the evaporator medium (16).

10. Evaporator arrangement according to one of Claims 1 to 9, **characterized in that** a mixing/combustion chamber (40; 40a), in which the mixture introduced into it can be ignited by means of an igniting element, is provided downstream - with respect to the flow of the mixing material through the evaporator medium (16; 16a) - of the evaporator medium (16; 16a).

11. Evaporator arrangement according to one of Claims 1 to 10, **characterized by** a heat exchanger arrangement (48; 48a) for transferring process heat to mixing material intended for forming the mixture.

12. Reformer for producing hydrogen from a hydrocarbon/mixing-material mixture, comprising an evaporator arrangement (10; 10a) according to one of the preceding claims.

13. Reformer according to Claim 12, **characterized in that** the mixing material comprises air and/or water vapour.

14. Heater for generating heat by burning a hydrocarbon/mixing-material mixture, comprising an evaporator arrangement according to one of Claims 1 to 11, to generate the hydrocarbon/mixing-material mixture.

15. Exhaust-gas purifying system for purifying the gases emitted by an internal combustion engine, comprising an evaporator arrangement according to one of Claims 1 to 11, to generate a hydrocarbon/mixing-material mixture.

## Revendications

1. Système d'évaporateur, en particulier pour produire un mélange d'hydrocarbures et de matière mixte qui peut être décomposé dans un reformeur en vue de la récupération d'hydrogène, et qui comprend un substrat poreux d'évaporateur (16; 16a), un système (18; 18a) d'amenée d'hydrocarbures qui amène des hydrocarbures au substrat poreux d'évaporateur (16; 16a) ainsi qu'un système (28; 28a) d'amenée de matière mixte qui conduit à travers le substrat d'évaporateur (16; 16a) au moins une partie de la matière mixte prévue pour la formation du mélange.

2. Système d'évaporateur selon la revendication 1, **caractérisé en ce que** le substrat d'évaporateur (16; 16a) présente plusieurs ouvertures (38) de passage de la matière mixte.

3. Système d'évaporateur selon la revendication 1 ou 2, **caractérisé en ce qu'**un dispositif de chauffage (20) alimenté en électricité est associé au substrat d'évaporateur (16).

4. Système d'évaporateur selon la revendication 3, **caractérisé en ce que** le dispositif de chauffage (20) est disposé du côté amont du substrat d'évaporateur (16) dans le sens de la traversée du substrat d'évaporateur (16) par la matière mixte et en contact de transfert thermique avec ce dernier.

5. Système d'évaporateur selon la revendication 4, **caractérisé en ce qu'**un système d'écran (34) qui protège le dispositif de chauffage (20) vis-à-vis de la matière mixte qui doit s'écouler sur le substrat d'évaporateur (16) est associé au dispositif de chauffage (20).

6. Système d'évaporateur selon la revendication 5, **caractérisé en ce que** le système d'écran (34) comprend une plaque d'écran (34) qui présente des ouvertures (36) qui permettent le passage de la matière mixte.

7. Système d'évaporateur selon l'une quelconque des revendications 3 à 6, **caractérisé en ce que** le dispositif de chauffage (20) présente un élément chauffant (22) dont au moins certaines parties sont courbées ou s'étendent en spirale.

8. Système d'évaporateur selon la revendication 7, **caractérisé en ce qu'**au moins une partie du substrat d'évaporateur (16) est disposée dans une partie de l'espace entouré par l'élément chauffant (22).

9. Système d'évaporateur selon la revendication 1 ou 2, **caractérisé en ce qu'**un dispositif de chauffage (54a) de la matière mixte alimenté en électricité est prévu dans une partie du système (28) d'amenée de la matière mixte située en amont dans la direction de traversée du substrat d'évaporateur (16) par la matière mixte et à distance du substrat d'évaporateur (16).

10. Système d'évaporateur selon l'une quelconque des revendications 1 à 9, **caractérisé en ce qu'**une chambre (40; 40a) de mélange et de combustion dans laquelle le mélange introduit peut être allumé au moyen d'un organe d'allumage est prévue en aval du substrat d'évaporateur (16; 16a) dans la direction de traversée du substrat d'évaporateur (16; 16a) par la matière mixte.

11. Système d'évaporateur selon l'une quelconque des revendications 1 à 10, **caractérisé par** un système (48; 48a) d'échange de chaleur qui transfère la chaleur du processus à la matière mixte prévue pour former le mélange.

12. Reformeur de récupération d'hydrogène à partir d'un mélange d'hydrocarbures et de matière mixte, qui comprend un système d'évaporateur (10; 10a) selon l'une quelconque des revendications précédentes.

13. Reformeur selon la revendication 12, **caractérisé en ce que** la matière mixte comprend de l'air et/ou de la vapeur d'eau.

14. Appareil de chauffage qui crée de la chaleur par combustion d'un mélange d'hydrocarbures et de matière mixte et qui comprend un système d'évaporateur selon l'une quelconque des revendications 1 à 11 pour créer le mélange d'hydrocarbures et de matière mixte.

15. Système d'épuration des gaz d'échappement destiné à épurer des gaz expulsés par un moteur à combustion interne et qui comprend un système d'évaporateur selon l'une quelconque des revendications 1 à 11 pour créer un mélange d'hydrocarbures et de matière mixte.
